# EUROPEAN PATENT APPLICATION

(11) **EP 0 733 948 A1**
(43) Date of publication of application: **25.09.1996**
(21) Application number: 96102872.7
(22) Date of filing: 27.02.1996
(51) Int. Cl.: G03D 15/04, G03B 17/26

(54) **Film re-shaping device**

(30) Priority: 24.03.1995 US 409789
(71) Applicant: EASTMAN KODAK COMPANY, Rochester, New York 14650-2201 (US)
(72) Inventor: Tianello, Dennis Francis, c/o Eastman Kodak Co., Rochester, New York 14650-2201 (US); Rowden, David Lawrence, c/o Eastman Kodak Co., Rochester, New York 14650-2201 (US); Greene, William James, c/o Eastman Kodak Co., Rochester, New York 14650-2201 (US)
(74) Representative: Blickle, K. Werner, Dipl.-Ing.

(57) **Abstract**

A template having a desired filmstrip configuration which can be used to hold and re-shape a damaged filmstrip for manual re-shaping operations having, a lower guide plate for receiving the undamaged portion of the filmstrip having a short end configured in the desired end of filmstrip shape, a locating feature for engaging a hole in the filmstrip, a guide for aligning an edge of the filmstrip, a matching upper guide plate for receiving the filmstrip between the plates and holding the filmstrip while the damaged portion of the filmstrip is removed and the undamaged portion of the filmstrip is re-shaped, is described. A method for re-shaping the filmstrip end using the template is also described.

## Description

### Field Of The Invention

This invention relates generally to film shaping tools, and more particularly to a device in the form of a hand-held template for use in re-shaping the end of a filmstrip, and to a method for re-shaping the filmstrip end.

### Background Of The Invention

In photographic film processing one or both ends of the filmstrip need to be in an acceptable condition to perform certain tasks. In order to do this the leading and the trailing ends of the filmstrip must conform to the proper shape. These ends may become disabled due to abuse or inadvertent damage or through the use of a splice tape meant to provide a purpose for another application. It is therefore necessary that the damaged end or ends of the filmstrip be returned to their original condition before the next task can be performed.

Currently the leading and trailing ends of photographic film, such as 35 mm film, are square cut during splicing and heat seal splicing tape is applied to join the filmstrips together for continuous processing and printing in a large photo finishing laboratory. At finishing the filmstrip is cut into strips, for example strips of four frames, and returned to the customer along with an attached film splice label. A new photographic system is contemplated which requires the film to be returned to a cartridge, for example the customers original cartridge. This will require filmstrip geometry to be retained by reforming the trailing end of the filmstrip after processing of the spliced film so that the film can be reattached to the spool in the cartridge. One method of accomplishing this function is to remove the splice tape by cutting and then re-shaping the cut ends. By cutting the spliced film to remove the splice tape rather than using thermal desplicing methods, concern that adhesive residue on the film ends is being returned to the customer which might cause a future problem in the cartridge is eliminated.

As part of the attachment or detachment process for films, it may be required for the photographic system to accurately and reliably sense the physical end of a filmstrip. This may be necessary to insure that the filmstrip is completely unwound from a film cartridge prior to the detachment operation or the filmstrip is fully positioned prior to an attachment operation. For these functions, the exposed image area of the filmstrip is not important. Most film features (*i.e.* perforations and holes) are intended as features that identify individual exposure frames or the end of the exposure area and not the physical end of the filmstrip. Technologies exist to sense tension in a web or film features that relate to the exposure area of a film but both schemes are deficient in that sensing of the physical end of the filmstrip is not absolutely confirmed.

U.S. Patent No. 4,131,040 discloses an apparatus, for forming holes in the end of a printing blanket, in the form of a template having a locating hole for disposing around a locating pin, holes for receiving a punch, and a clamp for clamping the template against the blanket at a location remote from the locating pin.

U.S. Patent No. 4,505,039 discloses a seaming tool, for trimming the ends of adjoining floor covering materials to form a joint, in the form of a template which is positioned over the material to be trimmed. A stop is provided to position the template along an end of already laid floor covering and the edge of the material to be trimmed is manually trimmed against the edge of the template.

U.S. Patent No. 3,499,202 discloses a machine for cutting a continuous roll of unexposed movie film into controlled lengths for loading into film cartridges and re-shaping the leading and trailing ends of the cut film to facilitate its loading into a cartridge. A punching assembly is provided which simultaneously punches the leading end of the rolled filmstrip and the trailing end of the next filmstrip to be rolled.

U.S. Patent No. 3,586,258 discloses a method and an apparatus for loading unexposed photographic film in tape form into a cassette. After a length of film is wound onto the cassette the film is stopped and cut to provide a trailing end for the film in the cassette and a leading end of new film to be inserted in a new cassette. A punch is provided for punching the leading end to provide an anchoring means for attaching to the cassette spool.

U.S. Patent No. 3,854,357 discloses a method and an apparatus for removing an imperfect portion of a web to form trailing and leading web portions, and splicing the web portions to form a continuous perfect web. The apparatus comprises knife blades for separating the imperfect portion and a guiding member for aligning the leading web end with the trailing web end in position to be spliced.

In the present application the term "end-locating distance" defines a length corresponding to the distance, in a photographic film having a filmstrip exposure area on a portion of the film and a filmstrip trailing end, which is greater than the length of the filmstrip remaining inside a corresponding film cartridge with a spool core to which the trailing end is attached when the film is fully withdrawn and is still attached to the spool core and less than the distance from the end of the exposure area to the physical end of the filmstrip trailing end.

It is an objective of this invention to provide an inexpensive template having a desired filmstrip configuration which can be used to hold and position the end of the filmstrip for manual re-shaping and hole punching operations

### Summary Of The Invention

Briefly stated and in accordance with one aspect of the invention there is provided a device in the form of a template for use in re-shaping the end of a filmstrip having a damaged end portion attached to an undamaged portion of the filmstrip comprising;
a lower guide plate having a short end configured in the desired end of filmstrip shape for receiving the undamaged portion of the filmstrip, a locating feature protruding upwards from a first long edge of the lower plate for engaging a hole in the filmstrip, a guide formed along the first long edge of the lower plate for aligning an edge of the filmstrip, an upper guide plate having a short end matching the shape of the short end of the lower guide plate and including a feature for cooperating with the locating feature of the lower guide plate to orient the two plates to one another, whereby the filmstrip is held between the plates while the damaged portion of the filmstrip is removed and the undamaged portion of the filmstrip is re-shaped.

In another aspect of the invention the upper and lower guide plates of the template have matching cut-out features for locating and receiving a punch for perforating the captured filmstrip at these locations.

In yet another aspect of the invention the upper and lower guide plates have a matching cut-out feature located at an end-locating distance from the end of the template for receiving a punch for perforating the filmstrip and positively confirming a physical end of the filmstrip.

In another aspect of the invention there is provided a method for re-shaping the end of a filmstrip having a damaged end portion attached to an undamaged portion of the filmstrip comprising the steps of, capturing the undamaged end of the filmstrip in a template comprising, a lower guide plate for receiving the undamaged portion of the filmstrip having a short end configured in the desired end of filmstrip shape, a locating feature protruding upwards from a first long edge of the lower plate for engaging a hole in the filmstrip, a guide formed along the first long edge of the lower plate for aligning an edge of the filmstrip, an upper guide plate having a short end matching the shape of the short end of the lower guide plate and including a feature for cooperating with the locating feature of the lower guide plate to orient the two plates to one another; and cutting along an edge of the short end of the guide plate to remove the damaged portion and form the desired end of filmstrip shape.

In yet another aspect of the invention there is provided a method for re-shaping the end of a filmstrip in which the upper and lower guide plates have matching cut out features for locating and receiving a punch, comprising the step of, perforating the filmstrip by hand-punching at the desired locations of the template.

In yet another aspect of the invention there is provided a method for re-shaping the trailing end of a filmstrip having a damaged end portion attached to an undamaged portion of the filmstrip comprising the steps of; capturing the undamaged end of the filmstrip in a template comprising, a lower guide plate having a short end configured in the desired end of filmstrip shape for receiving the undamaged portion of the filmstrip, the lower guide plate having in addition a cut-out feature located at an end-locating distance from the re-shaping end of the template for receiving a punch for perforating the filmstrip and positively confirming a physical end of the filmstrip, and an upper guide plate having a short end matching the shape of the short end of the lower guide plate, the upper guide plate having in addition an end-locating cut-out feature matching the end-locating cut-out feature of the lower guide plate; perforating the filmstrip by hand-punching at the cut-out feature of the template; and cutting along an edge of the short end of the guide plate to remove the damaged portion and form the undamaged portion of the filmstrip with the desired end of filmstrip shape.

This invention provides an inexpensive template which can be used manually to hold a filmstrip while it is re-shaped with a desired end of filmstrip configuration.

The novel aspects of this invention are set forth with particularity in the appended claims. The invention itself, together with further objects and advantages thereof may be more fully comprehended by reference to the following detailed description of a presently preferred embodiment of the invention taken in conjunction with the accompanying drawings.

### Brief Description Of The Drawings

Figure 1 illustrates a re-shaping device of the invention;
Figure 2 illustrates a filmstrip with an end of film configuration;
Figure 3 illustrates an example of a film with exposure area film features;
Figure 4 illustrates a second example of a filmstrip with an end of filmstrip feature; and
Figure 5 illustrates a third example of a filmstrip with an end of filmstrip feature.

### Detailed Description Of The Invention

Although different film sizes can be used with the device of this invention, the invention is disclosed as being embodied preferably for re-shaping film for loading in a 35 mm like cartridge (cassette) or use with associated photo finishing equipment. Because such a film and equipment are well known, this description is directed in particular to photographic elements forming part of or cooperating directly with the disclosed embodiment. However, other film sizes also fall within the invention. It is to be understood, however, that other elements not specifically shown or described may take various forms known to persons of ordinary skill in the art.

A filmstrip which is in need of re-shaping typically has a damaged end which is attached to the undamaged portion of the filmstrip. The filmstrip is positioned in the film re-shaping device so that the undamaged portion is accurately aligned at one end and the damaged end extends beyond the re-shaping end of the device. The re-shaping operation severs the film and the damaged portion is discarded and simultaneously the new end of the undamaged portion of the filmstrip is re-shaped in the desired configuration.

The device of this invention is designed for use in re-shaping and re-forming the ends of filmstrips which are not simply square cut to give a rectangular shaped end as used, for example, in splicing operations. Square cut ends can be readily formed by cutting with a blade or guillotine like devices. Templates of this invention provide filmstrip ends featuring, for example, tapered, arcuate and other non-rectangular shapes, with and without notches or perforations.

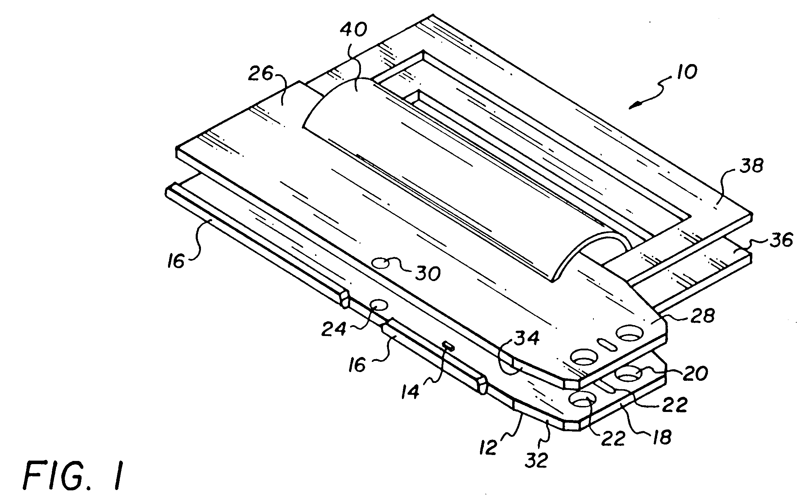

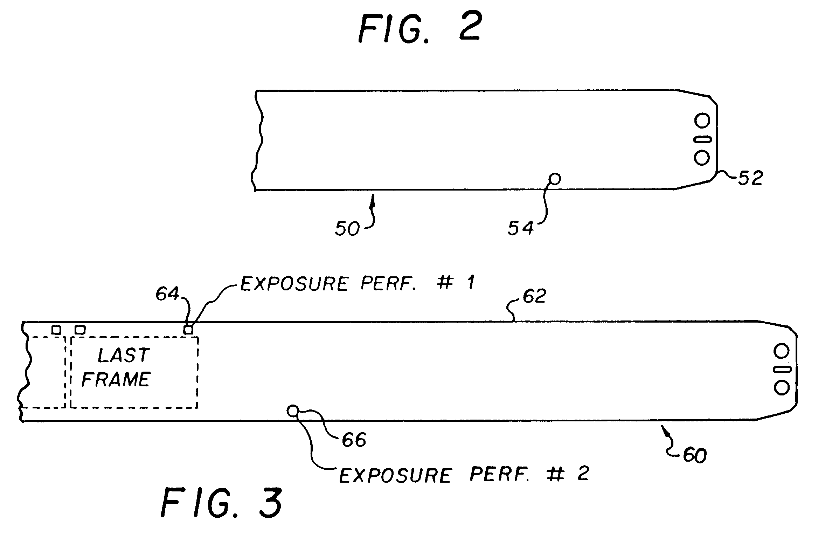

Referring to Figures 1 and 2, an example of a hand-held film re-shaping device 10 and a filmstrip 50 are shown. This device is a, preferably generally rectangular shaped, template with a short end shaped with the desired end of filmstrip configuration, for example as shown for the filmstrip trailing end 50 having cut-out features 52 and 54. The filmstrip would be cut around the edges and perforated through cut-out apertures of this template to reshape the filmstrip to the desired configuration.

The film re-shaping template 10 can be made from different materials, for example, metals and plastics. The lower guide plate 12 has an upstanding protruding feature 14 adjacent to a long edge that locates a hole or perforation in the filmstrip. A guide feature 16 is attached to the long edge of the guide which locates and aligns the edge of the filmstrip. The filmstrip is located on the lower guide plate so that the damaged end extends a sufficient distance beyond the end of the plate 18 to allow removal of the damaged portion of the film. A film perforation at the edge of the film surrounds the locating feature 14 and the edge of the film abuts the guide feature 16. When necessary the end of the guide plate is provided with cut-out features of any desired configuration.

For exemplary purposes a template with a trailing end of film configuration with cut-out features is illustrated by Figure 1. The end of the guide plate 18 contains holes 20 and a slot 22 cut out in the desired end of filmstrip locations, and a cut-out hole 24 in the guide plate located adjacent to a long edge is provided at an end-locating distance from the end of the guide 18. The shapes of these cut-out features can be any suitable shape for example, round, oval, rectangular, or generally obround shaped and the cut-outs can be combined in any suitable configuration for the task to be performed. In this embodiment of the template the end of each plate is tapered down towards the end, the narrow end of the taper is at right angles to the long axis of the plate, and cut-out features are formed adjacent to and aligned parallel with the narrow end. In a preferred configuration, for attaching the filmstrip to a film holding device the apertures at the end of the filmstrip are circular or generally obround shaped and form a row of a generally obround shaped slot between two circular holes.

The upper guide plate 26 has the same profile and cut-out features 28, 30 as the lower guide so that when it is placed on top of the filmstrip the profiles of the two plates and the cut-out features are matched and aligned with each other. The upper guide plate abuts against the guide 16 on the lower guide plate which also serves to position and align the upper guide plate The upper guide can also have a features (not shown) which mates with the locating feature on the lower guide and orients the two plates correctly to one another. External features 32, 34 in the profiles of the lower and upper guide plates also aid in orienting the two plates correctly to one another.

The trailing end of film configuration illustrated in Figures 1 and 2 can be used in photographic systems which incorporate a film with a trailing end filmstrip having an end-locating feature that is directly associated with end of a filmstrip trailing end for positioning the filmstrip and positively confirming the physical end of the filmstrip prior to an attachment or detachment operation. The cut-out features 24, 30 in Figure 1 correspond to the end-locating end of filmstrip feature. Figures 2-5 describe a film with such features.

Referring to Figure 3, an example of a film 60 with known exposure area features is shown. The trailing end of the filmstrip 62 has first and second exposure features in the form of perforations at locations 64 or 66 adjacent to the edges of the filmstrip which are directly related to the exposure area of the filmstrip and signal to a camera or photo finishing equipment that the last exposed frame has been reached. These perforations are preformed during manufacture of the unexposed film. Because of film damage which can result from abuse or necessary processing operations it is sometimes necessary to re-shape or re-form the physical end of the filmstrip so that the film can be reattached to a film holding device. This is accomplished by positioning the filmstrip in a film re-shaping device which can re-form the end of the film by cutting off the damaged end and re-shaping and perforating the filmstrip in the desired end of film configuration. When this is done the film is shortened and the relationship between the exposure area features and the physical end of the filmstrip changes. Thus an exposure feature cannot be used by itself to determine the physical end of the filmstrip.

Referring to Figure 2, there is shown an example of a filmstrip 50 having a trailing end 52 in which a film feature, for example, a perforation hole 54 is located at a precise, end-locating distance from the physical end of the filmstrip to form an end of filmstrip perforation. The perforation is located at distance from the end of the filmstrip which is short of the film exposure area and greater than the length of film remaining inside a corresponding film cartridge when the film is fully withdrawn and is still attached to the spool core. Thus the perforation is outside the cartridge and can be detected by a sensor for determining the physical end of the filmstrip. The feature may have any suitable shape or dimension, for example, a circular hole or a generally rectangular shaped slot, which can be located by a sensor. In a preferred embodiment of the invention the feature is in the form of a circular perforation. In this embodiment of the filmstrip, the end of the filmstrip is tapered down towards the end, the narrow end of the taper is at right angles to the long axis of the filmstrip and a row of perforations at the end of the filmstrip are adjacent to and aligned parallel with the narrow end. The row of perforations can be attached to a film holding device. In a preferred configuration, for attaching the filmstrip to a film holding device, for example, a spool core of a cartridge, the perforations at the end of the filmstrip are circular or generally obround shaped and form a row of a generally obround shaped slot between two circular holes.

The sensor can be any suitable device, for example an optical sensor or equivalent device, which senses the presence of the end of filmstrip perforation and signals a logic or control device to activate a piece of equipment for use in attaching or detaching the filmstrip.

When it is necessary to re-shape or re-form the end of the filmstrip a new end-locating end of filmstrip perforation would be created and located at the same precise distance from the new end of the filmstrip as the old perforation was from the end of the original filmstrip. The perforation is preferably located adjacent to an edge of the filmstrip. Such a location at the edge of the filmstrip is more convenient for cooperating with sensing equipment and other features on the filmstrip.

In some photographic systems the film is reloaded into the customers cartridge. When this is done it is necessary to position the filmstrip so that the correct length of film is fed into the cartridge for attaching to the spool. The end-locating end of film feature 54 allows accurate determination of this length and also helps align the film with the cartridge. Similarly when such a film is removed from the cartridge or a film holding device, detection of the precise position of the end of the film is needed to signal equipment used to release the film from the film holder.

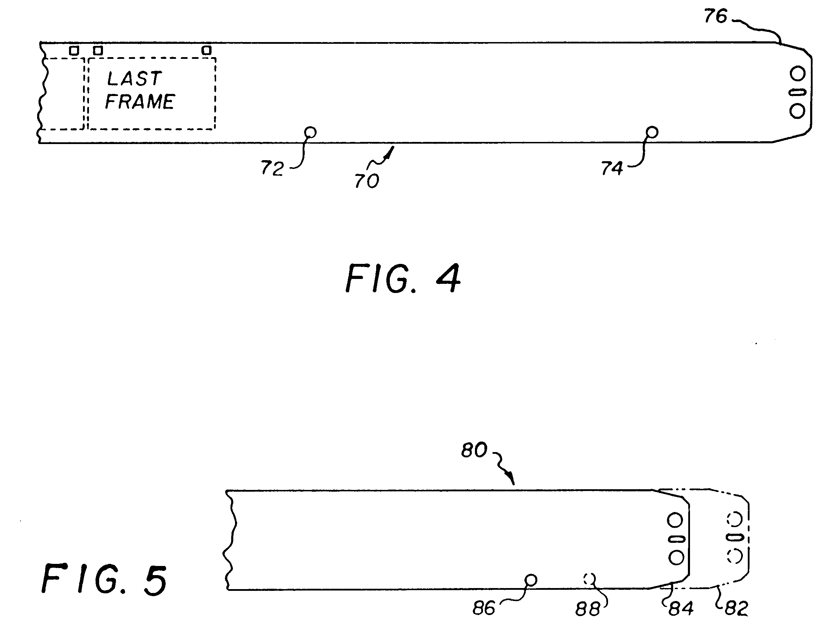

Referring to Figure 4, there is shown an example of a film 70 in which the exposure perforation 72 and the end-locating end of filmstrip perforation 74 at the trailing end 76 of the filmstrip are preferably adjacent to the same edge of the film and are aligned in a longitudinal direction. The exposure perforation is more remote from the end of the film than the end-locating end of filmstrip perforation. In another embodiment of the invention the exposure perforation or feature serves as an anticipation feature for alerting the sensor and signaling the control device to wait until the next perforation is sensed before activating equipment. The exposure features 64 and 66, Figure 3, can be used separately or in combination as anticipation features.

In a typical detachment operation in which the end of the film is being removed from an apparatus, such as a film cartridge or a processing spool the filmstrip would be removed using nip rollers or other known means for film removal. An optical sensor or equivalent device would sense the presence of the end-locating end of film perforation during the removal. The logic or control device would be programmed to stop removal of the filmstrip and the physical end of the filmstrip would be identified and precisely located. Alternatively the sensor would sense the presence of the exposure perforation during the removal and the logic or control device would be programmed to wait until the next perforation, for example the end of filmstrip perforation, is sensed. The logic device would then stop removal of the filmstrip and the physical end of the filmstrip would be identified and precisely located. The filmstrip is then detached from the apparatus by a suitable means for detaching the filmstrip end.

For some photographic systems, in order to limit the length of the unused portion of the film, the end of filmstrip perforation is located, for example, at about 38 mm from the physical end of the filmstrip and centered 2 mm from the edge of the filmstrip. This allows for up to about three re-formings of a damaged end of the film, including a new end of filmstrip perforation, before the end of the film approaches too close to the end of the exposure area and it becomes inoperable. When an anticipation feature, for example an exposure feature, is present at the end of the exposure area then after three reforming operations the filmstrip is appreciably shorter and thus the exposure feature and the end of filmstrip perforation might overlap or interfere with each other.

Figure 5 illustrates a filmstrip 80 in which a damaged end of the filmstrip 82 is removed and a new end 84 is re-formed. Simultaneously a new end-locating end of film perforation 86 is formed. The old end-locating end of film perforation 88 remains but no longer serves any function. Since it is between the new end of filmstrip perforation and the end of the filmstrip it will not interfere with subsequent sensing of the filmstrip end and reforming operations.

Referring again to Figure 1, the template 10 is provided with a C-shaped clamping device 40. The clamp provides a spring load so that when it is slipped onto the guide plates the filmstrip is held firmly in position. The clamping device can be separate from the guide plates and before the re-shaping operation it is forced apart and slipped over the outer surfaces of the guide plates to hold them together. Alternatively the clamp can be formed as an integral part attached to an outer surface, adjacent to a long edge, of one of the guide plates and when the plates are mated to capture the filmstrip the free edge of the clamp slips over the other guide and holds the guides tightly together. It is apparent that any clamping means can be used which does not interfere with the re-shaping operation, for example, vice-grips, adjustable C-clamps and the like.

In a preferred embodiment, as shown in Figure 1, handles 36, 38 attached to the lower and upper guides are provided for gripping the device. Such handles are useful for holding the template when re-shaping operations, for example cutting and punching, are being carried out or when the filmstrip is inserted or removed. It is apparent that a template without handles or one having other means, known in the art, for hand-holding the device are contemplated and fall within the scope of the invention

After the two plates are oriented and the filmstrip is held securely in position, a knife or scissors can be used to re-shape the outside film edge. The holes and/or slots in the lower and upper guides are used as a locating feature for a punch, for example, a hand punch that would perforate the filmstrip with a desired shape at those locations and thus the end of the filmstrip is re-shaped or re-formed. In one aspect of the invention the locating feature 14, Fig. 1, engages an existing end of filmstrip perforation in the end of the filmstrip to be reshaped.

The profile of the template can be readily engineered to match any desired shape. It is common practice to have film in which the leading end and the trailing end have different profiles. Thus a photo finishing operator would need to have available re-shaping template devices for each end. Either one or both ends of a filmstrip may need to be re-shaped. For example, after operations using spliced films the splice tape may have to be destructively removed if the individual films are to be used in a subsequent operation. The ends of the films must then be re-shaped to the requirements of that operation.

A template having a different configuration at each end, for example, a trailing end and a leading end of filmstrip, is also contemplated by this invention.

This device can be manufactured from inexpensive components and can be used by inexperienced operators with very little training.

While the invention has been described in connection with a presently preferred embodiment thereof, those skilled in the art will recognize that many modifications and changes may be made therein without departing from the true spirit and scope of the invention, which accordingly is intended to be defined solely by the appended claims.

## Claims

1. A template for use in re-shaping the end of a filmstrip having a damaged end portion attached to an undamaged portion of the filmstrip comprising:
a lower guide plate having a short end configured in the desired end of filmstrip shape for receiving the undamaged portion of the filmstrip;
a locating feature protruding upwards from a first long edge of the lower plate for engaging a hole in the filmstrip;
a guide formed along the first long edge of the lower plate for aligning an edge of the filmstrip; and
an upper guide plate having a short end matching the shape of the short end of the lower guide plate and including a feature for cooperating with the locating feature of the lower guide plate to orient the two plates to one another;
whereby the filmstrip is held between the plates while the damaged portion of the filmstrip is removed and the undamaged portion of the filmstrip is re-shaped.

2. The template according to Claim 1, in which each of the upper and lower guide plates further comprises a matching cut-out feature for locating and receiving a punch for perforating the captured filmstrip at these locations.

3. The template according to Claim s, wherein the matching cut-out feature is located along the first long edge of the lower guide plate at an end-locating distance from the re-shaping end of the plate.

4. The template according to Claim 1, further comprising a clamp attached to one of the guide plates, for clamping the guide plates together and holding the filmstrip securely in position.

5. A template for use in re-shaping the trailing end of a filmstrip having a damaged end portion attached to an undamaged portion of the filmstrip comprising:
a lower guide plate for receiving the undamaged portion of the filmstrip having a short end configured in the desired trailing end of filmstrip shape, having cut-out features for locating and receiving a punch for perforating the captured filmstrip at these locations, wherein one of the cut-out features is located along a first long edge of the lower guide plate at a end-locating distance from the trailing end re-shaping end of the plate for receiving a punch for providing the filmstrip trailing end with an end-locating end of filmstrip perforation for positively confirming a physical end of the filmstrip;
a locating feature protruding upwards from a first long edge of the lower plate for engaging a existing end-locating end of filmstrip perforation in the filmstrip;
a guide formed along the first long edge of the lower plate for aligning an edge of the filmstrip; and
an upper guide plate having a short end matching the shape of the short end of the lower guide plate having cut-out features matching the cut-out features of the lower guide plate, and including a feature for cooperating with the locating feature of the lower guide plate to orient the two plates to one another;
whereby the filmstrip is held between the plates while the damaged portion of the filmstrip is removed and the undamaged portion of the filmstrip is re-shaped.

6. The template according to Claim 5, further comprising a spring loaded clamp attached to one of the guide plates for clamping the guide plates together and holding the filmstrip securely in position.

7. A template for use in re-shaping the trailing end of a filmstrip having a damaged end portion attached to an undamaged portion of the filmstrip comprising:
a lower guide plate having a short end configured in the desired end of filmstrip shape for receiving the undamaged portion of the filmstrip, the lower guide plate having in addition a cut-out feature located at an end-locating distance from the re-shaping end of the template for receiving a punch for perforating the filmstrip and positively confirming the physical end of the filmstrip; and
an upper guide plate having a short end matching the shape of the short end of the lower guide plate , the upper guide plate having in addition an end-locating cut-out feature matching the end-locating cut-out feature of the lower guide plate.

8. A method for re-shaping the end of a filmstrip having a damaged end portion attached to an undamaged portion of the filmstrip comprising the steps of;
capturing the undamaged end of the filmstrip in a template comprising, a lower guide plate for receiving the undamaged portion of the filmstrip having a short end configured in the desired end of filmstrip shape, a locating feature protruding upwards from a first long edge of the lower plate for engaging a hole in the filmstrip, a guide formed along the first long edge of the lower plate for aligning an edge of the filmstrip, an upper guide plate having a short end matching the shape of the short end of the lower guide plate and including a feature for cooperating with the locating feature of the lower guide plate to orient the two plates to one another; and
cutting along an edge of the short end of the guide plate to remove the damaged portion and form the desired end of filmstrip shape.

9. The method according to Claim 8 in which the upper and lower guide plates have matching cut out features for locating and receiving a punch, further comprising the step of, perforating the filmstrip by hand-punching at these locations of the template.

10. A method for re-shaping the trailing end of a filmstrip having a damaged end portion attached to an undamaged portion of the filmstrip comprising the steps of;
capturing the undamaged end of the filmstrip in a template comprising, a lower guide plate having a short end configured in the desired end of filmstrip shape for receiving the undamaged portion of the filmstrip, the lower guide plate having in addition a cut-out feature located at an end-locating distance from the re-shaping end of the template for receiving a punch for perforating the filmstrip and positively confirming a physical end of the filmstrip, and an upper guide plate having a short end matching the shape of the short end of the lower guide plate , the upper guide plate having in addition an end-locating cut-out feature matching the end-locating cut-out feature of the lower guide plate;
perforating the filmstrip by hand-punching at the cut-out feature of the template; and
cutting along an edge of the short end of the guide plate to remove the damaged portion and form the undamaged portion of the filmstrip with the desired end of filmstrip shape.
